# EUROPÄISCHE PATENTANMELDUNG

(11) **EP 1 980 324 A2**
(43) Veröffentlichungstag der Anmeldung: **15.10.2008**
(21) Anmeldenummer: 07716000.0
(22) Anmeldetag: 09.01.2007
(51) Int. Cl.: B03B 9/06

(54) **VERFAHREN ZUR HERSTELLUNG EINES SCHÜTTGUTKONZENTRATS ZUR EXTRAKTION WERTVOLLER METALLE**

(30) Priorität: 10.01.2006 RU 2006100555
(71) Anmelder: ZAKRYTOE AKCIONERNOE OBSHESTVO "URALKALIY-TECHNOLO, Permsky krai 618426 (RU)
(72) Erfinder: SMETANNIKOV, Andrei Filippovich, Perm, 614061 (RU); ONOSOV, Dmitriy Valentinovich, Perm, 614061 (RU); KRASNOSHTEIN, Arkadiy Evgenievich, Perm, 614039 (RU)
(74) Vertreter: Jeck, Anton
(86) Internationale Anmeldenummer: PCT/RU2007/000003
(87) Internationale Veröffentlichungsnummer: WO 2007/100275

(57) **Zusammenfassung**

Die Erfindung betrifft ein Verfahren zur Gewinnung des kollektiven Konzentrats zur Extraktion von Edelmetallen. Ist nach der Erfindung vorgesehen, dass das Hydrozyklonieren hintereinander in Zyklonen mit einer Kegelneigung von 10°, 7° und 5° durchgeführt wird, wobei das kollektive Konzentrat aus den ton- und salzhaltigen Abfällen zur Extraktion der Edelmetalle das Gemisch sedimentärer und flotierbare Materialien darstellt und die im Wasser nicht lösbare Schlammreste bilden, dass der Überlauf des zweiten Hydrozyklons in Form von Salzlösung und flotierbarem Teil des mit Wasser nicht lösbaren Schlammrestes mit den natürlichen und anthropogenen organischen Stoffen der dritten Hydrozyklonstufe zugeführt wird, dass über den Ablaufstutzen dieser Stufe die florierbare Fraktion mit den natürlichen und anthropogenen organischen Stoffen getrennt wird und dass die Konzentrate des ersten und zweiten Hydrozyklons vereinigt und das kollektive Konzentrat gebildet werden, wobei aus dem Sandansatzstück die Salzlösung als Abfallprodukt ausläuft, dann wird aus dem Salzansatzstück des dritten Hydrozyklons die Salzlösung als Abfallprodukt entnommen. Das technische Ergebnis ist das Erhalten des kollektiven Konzentrats (des im Wasser nicht lösbaren Schlammrestes) zur Extraktion von Au, Pt, Pd aus den lehm-und salzhaltigen Abfällen (Schlamm).

## Beschreibung

Die Erfindung betrifft ein Verfahren zur Gewinnung des kollektiven Konzentrats zur Extraktion von Edelmetallen durch das dreistufige Hydrozyklonieren des Schlammes mit der Trennung des Konzentrats, wobei dem Hydrozyklonieren der Schlamm im Verhältnis 1 : 3 von fest zu flüssig zugeführt wird.

Bekannt sind die nach dem technischen Wissen am nächsten stehenden Klassierverfahren des zerkleinerten Materials [das Nachschlagewerk für Anreicherung der Erze, Band 1. Vorbereitungsprozesse. Moskau, Verlag Boden, 1972. S. 276-278; Povarov A.I. Hydrozyklone, Moskau, Verlag Gosgortechisdat, 1961.] im Zentrifugalfeld, das durch Drehen der Pulpe erzeugt wird. (Hydrozyklone, in denen die flüssige Phase durch das Wasser vertreten ist.).

Dies kann die Trennung der Partikeln nach der Größe sein, indem die großen Partikeln in das Sandansatzstück und die kleinen Partikeln in den Überlauf wandern. Bei der Verkleinerung der Kegelneigung kann auch das kleine Material, aber mit der höheren Dichte als die Hauptmasse des kleinen Materials, durch das Sandansatzstück durchlaufen, [Smetannikov A.F., Kudryashov A.I. Über die Möglichkeit der Gold- und Silberextraktion aus den Erzen der Werchnekamsk- Salzlagerstätte. Erze und Metalle. 1995. Nr.5. S.118-121.]. Die genannten Verfahren sind für die Trennung des festen Materials im flüssigen Medium nach Größe oder Dichte bestimmt. Früher aber wurden diese Verfahren zur Trennung des festen Materials, das in den gesättigten Salzlösungen gleichmäßig verteilt ist, nicht verwendet. Zum Beispiel die Abfälle der Kaliunternehmen (Schlamm) sind durch zwei Phasen vertreten. Eine Phase ist die gesättigte Salzlösung und die zweite Phase sind die Teilchen des nicht lösbaren Restes.

Bekannt ist ein Verfahren zum Erhalten des Konzentrates aus den ton- und salzhaltigen Abfällen zur Extraktion der Edelmetalle (das russische Patent Nr. 2256504, Publikation 2005.07.20). Es umfasst wenigstens ein zweistufiges Hydrozyklonieren des Schlamms mit der Abtrennung des Konzentrates. Dabei wird das Hydrozyklonieren in zwei oder drei Stufen verwirklicht. Das Konzentrat der Hydrozyklone stellt eine feste Phase - den mit Wasser nicht lösbaren Schlammrest - dar. Den Hydrozyklonen wird dabei Schlamm im Verhältnis fest/flüssig von 1 : 3 zugeführt. In der ersten Hydrozyklonstufe werden das Konzentrat als eine große Fraktion des nicht lösbaren Restes sowie der Überlauf des ersten Hydrozyklons als eine kleine Fraktion und die Salzlösung abgetrennt. Der Überlauf des ersten Hydrozyklons wird auf ein Verhältnis fest/flüssig von 1 : 8 verdünnt und der Nachreinigung der zweiten Hydrozyklonstufe zugeführt. In dieser Stufe werden das Konzentrat als die restliche Fraktion des nicht lösbaren Schlammrestes und der Überlauf des zweiten Hydrozyklons als Salzlösung abgetrennt. Danach werden die durch Hydrozyklonieren abgetrennten Konzentrate vereinigt. Wenn der restliche Gehalt des micht lösbaren Restes im Überlauf des zweiten Hydrozyklons groß ist, wird eine dritte zusätzliche Hydrozyklonstufe durchgeführt. Somit kann Schlamm der Halurgie- und Flotationswerke verarbeitet werden.

Der Nachteil dieses Verfahrens ist ein ungenügend hoher Gehalt der Edelmetalle im Konzentrat aus den ton- und salzhaltigen Abfällen der Unternehmen.

Es ist Aufgabe der Erfindung ein Verfahren der eingangs erwähnten Art zu schaffen, bei dem eine komplexe Extraktion der Edelmetalle aus dem mineralischen Rohstoff, der durch die Ton- und Salzabfälle (Schlamm) bei der Kaliproduktion und durch den leitenden Ton vertreten ist und Chloride der alkalischen und erdalkalischen Elemente enthält, erfolgt.

Diese Aufgabe wird nach der Erfindung dadurch erreicht, dass das Hydrozyklonieren hintereinander in Zyklonen mit einer Kegelneigung von 10°, 7° und 5° durchgeführt wird, wobei das kollektive Konzentrat aus den ton- und salzhaltigen Abfällen zur Extraktion der Edelmetalle das Gemisch sedimentärer und flotierbare Materialien darstellt und die im Wasser nicht lösbare Schlammreste bilden, dass der Überlauf des zweiten Hydrozyklons in Form von Salzlösung und flotierbarem Teil des mit Wasser nicht lösbaren Schlammrestes mit den natürlichen und anthropogenen organischen Stoffen der dritten Hydrozyklonstufe zugeführt wird, dass über den Ablaufstutzen dieser Stufe die florierbare Fraktion mit den natürlichen und anthropogenen organischen Stoffen getrennt wird und dass die Konzentrate des ersten und zweiten Hydrozyklons vereinigt und das kollektive Konzentrat gebildet werden, wobei aus dem Sandansatzstück die Salzlösung als Abfallprodukt ausläuft.

Mit einem derartigen Verfahren kann der Schlamm aus einem Halurgie- und Flotationswerk mit sehr hohem Gehalt an natürlichen und anthropogenen Stoffen verarbeitet werden. Dank dieser Merkmale ist ein Verfahren geschaffen, das erlaubt, ein Konzentrat zu gewinnen, das einen wesentlichen Anteil der natürlichen und anthropogenen organischen Abfälle enthält, in denen der wesentliche Anteil der Edelmetalle konzentriert ist. Eine Weiterbildung des Verfahrens ist dadurch gekennzeichnet, dass bei einem Konzentrat mit überschlüssigen Salzgehalt eine Nachreinigung in gepaarten Hydrozyklonen mit der Kegel-Neigung von 10°, 7° und 5° entsprechend in jeder Zyklonierstufe durchgeführt wird, wobei der Überlauf der beiden Hydrozyklone mit der Neigung 10° dem Eingang des ersten Hydrozyklons mit der Neigung 7° zugeführt wird und die Überläufe des zweiten Hydrozyklons mit der Neigung 7° vereinigt und dem ersten Hydrozyklon mit der Neigung 5° zugeführt werden, dass das aus dem Sandansatzstück des ersten Hydrozyklons mit der Steigung 10° dem zweiten Hydrozyklon mit der Neigung 10° zugeführt wird, dass das Kondensat aus dem Sandansatzstück des ersten Hydrozyklon mit der Neigung speist den zweiten Hydrozyklon mit der Neigung 5° und dass aus dem Sandansatzstück des zweiten Hydrozyklons mit der Neigung von 5° die Lösung des von dem flotierbaren Teil des nicht lösbaren Restes gereinigten Salzes ausläuft und mit dem Überlauf des ersten Hydrozyklons mit der Neigung von 5° vereinigt und dem Aufnahmebehälter zur Bildung des kollektiven Konzentrates zugeführt wird.

Das erfindungsgemäße Verfahren besteht in der Anwendung von drei Hydrozyklonen mit der sich hintereinander verringernden Kegelneigung (10°, 7° und 5°) zum Trennen des festen Materials, das im flüssigen Medium (die gesättigten Salzlösungen) gleichmäßig verteilt ist. Das feste Material stellt eine große und eine kleine Fraktion der Ablagerung und das flotierbare Material dar, vertreten durch den natürlichen und anthropogenen organischen Stoff.

Die Ergebnisse, die nach diesem Verfahren erreicht werden, bestehen in der vollständigeren Trennung der zwei Phasen des festen Materials (der Ablagerung und des flotierbaren Teiles) aus dem Schlamm mit dem Restgehalt der Salze von höchstens 15 %. Der nicht lösbare Rest stellt das Konzentrat dar, das die Au-, Pt- und Pd-Verbindungen enthält. Die mineralische Basis des Konzentrates ist (abnehmend) Anhydrit, Dolomit, Quarz, Feldspat, Chlorit, Hydroglimmer, Eisenhydroxide, Sulfid, organischer Stoff, vertreten durch den natürliche und anthropogenen organischen Stoff.

Zur Gewinnung des kollektiven Konzentrates ist es notwendig:
1. Die Trennung des im Wasser nicht lösbaren Restes (des Konzentrates) aus den ton- und salzhaltigen Abfällen (Schlamm) mittels Hydrozyklonieren sicherzustellen;
2. Durch Hydrozyklonieren das Konzentrat mit einem Salzgehalt von höchstens 15 % für die weitere schmelzmetallurgische Verarbeitung zu gewinnen.

Das Verfahren wird wie folgt verwirklicht. Der Schlamm wird durch den Hydrozyklon mit der Kegelneigung von 10° geleitet. Dabei kommt der größere Teil der Ablagerungsfraktion des nicht lösbaren Restes in das Sandansatzstück und in den Überlauf gehen die kleine Fraktion der sedimentären Fraktion des im Wasser nicht lösbaren Restes, das flotierbare Material (organischer Stoff) und die Salzlösung. Der Überlauf des ersten Hydrozyklons mit der Kegelneigung von 10° wird zur Speisung des zweiten (7°) Hydrozyklons zugeführt. Dort kommt die kleine Fraktion des sedimentären Teiles des im Wasser nicht lösbaren Restes in das Sandansatzstück und in den Überlauf kommen das flotierbare Material (organischer Stoff) und die Salzlösung. Der Überlauf des zweiten (7°) Hydrozyklons dient zur Speisung des dritten (5°) Hydrozyklons. Dort kommt die Salzlösung in das Sandansatzstück und in den Überlauf kommen das flotierbare Material und die Salzreste. Dann werden die Konzentrate des ersten und zweiten Hydrozyklons mit dem flotierbaren Teil des im Wasser nicht lösbaren Restes, der in dem Überlauf des dritten Hydrozyklones erhalten ist, vereinigt. Auf diese Weise wird das Konzentrat gewonnen, das der schmelzmetallurgischen Verarbeitung zugeführt wird. Der Salzgehalt, beschränkt auf 15 %, wird im Laufe aller drei Hydrozyklonstufen angesammelt. Wenn das Konzentrat einen überschüssigen Salzgehalt aufweist, erfolgt die Nachreinigung in gepaarten Hydrozyklonen mit der Kegelneigung von 10°, 7° und 5° entsprechend für jede Stufe.

In diesem Fall wird das aus dem Sandansatzstück erhaltene Konzentrat zur Speisung des zweiten Hydrozyklons mit der Kegelneigung von 10° zugeführt. Dort läuft das Konzentrat mit der nachgereinigten großen Fraktion des nicht lösbaren Restes in das Sandansatzstück und wird danach dem Aufnahmebehälter zugeführt. Der Überlauf aus den beiden Hydrozyklonen mit der Kegelneigung von 10° wird vereinigt und der Speisung des ersten Hydrozyklons mit der Kegelneigung von 7° zugeführt. Das Konzentrat aus dem Sandansatzstück des ersten Hydrozyklons mit der Kegelneigung von 7° speist das zweite Hydrozyklon mit der Kegelneigung von 7°, wo das nachgereinigte Konzentrat der kleinen restlichen Fraktion des nicht lösbaren Restes dem Sandansatzstück und danach dem Aufnahmebehälter zugeführt wird. Der Überlauf der beiden Hydrozyklonen mit der Kegelneigung von 7° speist den ersten Hydrozyklon mit der Kegelneigung von 5°. Das Material aus dem Sandansatzstück des ersten Hydrozyklons mit der Kegelneigung von 5°speist den zweiten Hydrozyklon mit der Kegelneigung von 5°, wo aus dem Sandansatzstück die Lösung des von dem flotierbaren Teil des nicht lösbaren Restes gereinigten Salzes ausläuft. In den Ablassstutzen laufen die Reste des flotierbaren Materials des nicht lösbaren Restes, die mit dem Überlauf des ersten Hydrozyklons mit der Kegelneigung von 5° vereinigt und dem Aufnahmebehälter zur endgültigen Ausbildung des kollektiven Konzentrates zugeführt werden. In der Fig. wird das Fließbild der Gewinnung des kollektiven Konzentrates mit der Nachreinigung dargestellt.

Die Notwendigkeit eines derartig komplizierten Flussbildes ist durch jene Tatsache verursacht, dass im Schlamm nach der Flotationsüberarbeitung der kalium- und magnesiumhaltigen Erze im Unterschied zum Schlamm der Halurgieverarbeitung der kalium- und magnesiumhaltigen Erze der bedeutende Anteil der natürlichen und anthropogenen organischen Stoffen enthalten ist, in denen der bedeutende Anteil der Edelmetalle konzentriert ist.

Das zu verwendende kollektive Konzentrat aus den ton- und salzhaltigen Abfällen stellt der Schlamm von Halurgie- und Flotationswerken mit der Dichte der Pulpe 1,3 g/cm3 und mit dem Verhältnis fest/flüssig von 1:3 dar. Der Unterschied ist der hohe Gehalt des organischen Stoffes, vertreten durch die natürlichen und anthropogenen organischen Stoffen (Amine und Polyakrylamide). Dabei übertraf der Gehalt der organischen Stoffen für die Halurgiewerke (allgemein) keine 1,5 % und in unserem Beispiel erreichte der allgemeine Gehalt der organischen Stoffe 3 %. Das ist durch die Halurgieverarbeitung der Abfälle der Flotation verursacht. Diese Abfälle stellen den Zyklonstaub dar, in dem der Gehalt des organischen Stoffes traditionell hoch (bis 5 %) ist. Dies ist der Anwendung des Hydrozyklons mit der Kegelneigung von 5° in der dritten Hydrozyklonstufe zur vollständigen Trennung der flotierbaren Fraktion des nicht lösbaren Restes zurückzuführen ist. Der Einsatz dieser Stufe bedingte die vollständigere Extraktion des flotierbaren Teiles des nicht lösbaren Restes, vertreten durch die organischen Stoffe, mit den Verlusten höchstens 5 % und stellte die Gesamtverluste höchstens 7 % des nicht lösbaren Restes mit dem allgemeinen Koeffizienten 0,9 sicher.

## Patentansprüche

1. Verfahren zur Gewinnung des kollektiven Konzentrats zur Extraktion von Edelmetallen durch das dreistufige Hydrozyklonieren des Schlammes mit der Trennung des Konzentrats, wobei dem Hydozukonieren der Schlamm im Verhältnis 1 : 3 von fest zu flüssig zugeführt wird,
**dadurch gekennzeichnet,**
**dass** das Hydrozyklonieren hintereinander in Zyklonen mit einer Kegelneigung von 10°, 7° und 5° durchgeführt wird, wobei das kollektive Konzentrat aus den ton- und salzhaltigen Abfällen zur Extraktion der Edelmetalle das Gemisch sedimentärer und flotierbare Materialien darstellt und die im Wasser nicht lösbare Schlammreste bilden, dass der Überlauf des zweiten Hydrozyklons in Form von Salzlösung und flotierbarem Teil des mit Wasser nicht lösbaren Schlammrestes mit den natürlichen und anthropogenen organischen Stoffen der dritten Hydrozyklonstufe zugeführt wird, dass über den Ablaufstutzen dieser Stufe die florierbare Fraktion mit den natürlichen und anthropogenen organischen Stoffen getrennt wird und dass die Konzentrate des ersten und zweiten Hydrozyklons vereinigt und das kollektive Konzentrat gebildet werden, wobei aus dem Sandansatzstück die Salzlösung als Abfallprodukt ausläuft.

2. Verfahren nach Anspruch 1,
**dadurch gekennzeichnet,**
**dass** der Schlamm von Hylurgie- und Flotationswerken mit einem hohen Gehalt an natürlichen und anthropogenen Stoffen verarbeitet wird.

3. Verfahren nach Anspruch 1 und 2,
**dadurch gekennzeichnet,**
**dass** bei einem Konzentrat mit überschlüssigen Salzgehalt eine Nachreinigung in gepaarten Hydrozyklonen mit der Kegel-Neigung von 10°, 7° und 5° entsprechend in jeder Zyklonierstufe durchgeführt wird, wobei der Überlauf der beiden Hydrozyklone mit der Neigung 10° dem Eingang des ersten Hydrozyklons mit der Neigung 7° zugeführt wird und die Überläufe des zweiten Hydrozyklons mit der Neigung 7° vereinigt und dem ersten Hydrozyklon mit der Neigung 5° zugeführt werden, dass das aus dem Sandansatzstück des ersten Hydrozyklons mit der Steigung 10° dem zweiten Hydrozyklon mit der Neigung 10° zugeführt wird, dass das Kondensat aus dem Sandansatzstück des ersten Hydrozyklon mit der Neigung speist den zweiten Hydrozyklon mit der Neigung 5° und dass aus dem Sandansatzstück des zweiten Hydrozyklons mit der Neigung von 5° die Lösung des von dem flotierbaren Teil des nicht lösbaren Restes gereinigten Salzes ausläuft und mit dem Überlauf des ersten Hydrozyklons mit der Neigung von 5° vereinigt und dem Aufnahmebehälter zur Bildung des kollektiven Konzentrates zugeführt wird.
